# EUROPÄISCHE PATENTSCHRIFT

(11) **EP 2 805 076 B1**
(45) Veröffentlichungstag und Bekanntmachung des Hinweises auf die Patenterteilung: **13.04.2016**
(21) Anmeldenummer: 13701597.0
(22) Anmeldetag: 18.01.2013
(51) Int. Cl.: F16C 19/52, F16C 33/32, F16C 33/34, F16C 41/00, G01M 13/04, G01P 15/08, G01P 15/18

(54) **WÄLZKÖRPER UND WÄLZLAGER**
ROLLING BODY AND ROLLING BEARING
ÉLÉMENT ROULANT ET PALIER DE ROULEMENT

(30) Priorität: 20.01.2012 DE 102012200783
(43) Veröffentlichungstag der Anmeldung: 26.11.2014
(73) Patentinhaber: Aktiebolaget SKF, 415 50 Göteborg (SE)
(72) Erfinder: GRAF, Jens, 97422 Schweinfurt (DE); LANG, Defeng, NL-2614 Hp Delft (NL); OLSCHEWSKI, Armin, 97422 Schweinfurt (DE); STUBENRAUCH, Arno, 97491 Aidhausen (DE); ZIEGLER, Sebastian, 97535 Wasserlosen (DE)
(74) Vertreter: Kuhstrebe, Jochen
(86) Internationale Anmeldenummer: PCT/EP2013/050978
(87) Internationale Veröffentlichungsnummer: WO 2013/107887

(56) Entgegenhaltungen:
- DE-A1- 10 136 438
- DE-A1- 10 314 295
- DE-A1-102004 026 246
- DE-A1-102008 061 280
- DE-A1-102010 020 759
- DE-U1-202011 002 485
- JP-A- 2000 356 531

## Beschreibung

Die Erfindung geht aus von einem Wälzkörper nach dem Oberbegriff des Anspruchs 1.

Es ist ein Wälzkörper mit einer Ausnehmung bekannt, in welcher vier Dehnungsstreifen angeordnet sind, welche zu einer Messung von Verformungen des Wälzkörpers vorgesehen sind. DE 10 2004 026 246 A1 offenbart ein Wälzkörper nach dem Oberbegriff des Anspruchs 1.

Die Aufgabe der Erfindung besteht insbesondere darin, eine hohe Effizienz zu erreichen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Wälzkörper für ein Wälzlager mit einer Sensoreinheit.

Es wird vorgeschlagen, dass die Sensoreinheit dazu vorgesehen ist, bei wenigstens einem Betriebsvorgang eine Position eines Mittelpunkts des Wälzkörpers in einem Inertialsystem zu messen. Unter "vorgesehen" soll insbesondere speziell ausgelegt und/oder speziell ausgestattet und/oder speziell programmiert verstanden werden. Unter einem "Mittelpunkt" des Wälzkörpers soll insbesondere der Schwerpunkt des Wälzkörpers und/oder derjenige Punkt verstanden werden, welcher auf einer Hauptsymmetrieachse des Wälzkörpers angeordnet ist und welcher von einem ersten Ende des Wälzkörpers bezüglich der axialen Richtung des Wälzkörpers und einem zweiten Endes des Wälzkörpers bezüglich der axialen Richtung des Wälzkörpers gleich weit entfernt ist. Unter einer "Hauptsymmetrieachse" des Wälzkörpers soll insbesondere eine Achse verstanden werden, welche parallel zu einer axialen Richtung des Wälzkörpers verläuft, wobei vorzugsweise eine Drehung einer Gesamtlauffläche des Wälzkörpers um einen beliebigen Winkel um die Achse die Gesamtlauffläche auf sich selbst abbildet. Mit einer erfindungsgemäßen Ausgestaltung kann eine hohe Effizienz erreicht werden. Insbesondere kann eine Position des Mittelpunkts des Wälzkörpers relativ zu einem Innenring und/oder Außenring des Wälzlagers erfasst werden. Im besonderen kann eine Position einer Belastungszone des Wälzlagers gemessen werden. Vorzugsweise wird die Erde noch als ein Inertialsystem angesehen. Vorzugsweise wird ein relativ zur Erde festes Bezugssystem noch als ein Inertialsystem angesehen.

Vorzugsweise weist die Sensoreinheit wenigstens einen Beschleunigungssensor auf. Ihr doch an eine konstruktiv einfache Weise erreicht werden.

Ferner wird vorgeschlagen, dass der Beschleunigungssensor dazu vorgesehen ist, Beschleunigungen entlang einer axialen Richtung des Wälzkörpers zu messen. Auf die Weise kann eine einfache und präzise Messung der Position des Mittelpunkts erreicht werden.

Außerdem wird vorgeschlagen, dass der Beschleunigungssensor dazu vorgesehen ist, Beschleunigungen entlang einer bestimmten radialen Richtung des Wälzkörpers zu messen. Unter der "bestimmen" radialen Richtung des Wälzkörpers soll insbesondere eine radiale Richtung parallel zu einer Gerade verstanden werden, welche den Wälzkörper zu jeder Zeit in denselben Punkten schneidet. Dadurch kann ein konstruktiv einfaches und präzises Messen insbesondere für zylinderförmige Wälzkörper erreicht werden.

Mit Vorteil ist die Sensoreinheit dazu vorgesehen, bei dem Betriebsvorgang einen Schlupf des Wälzkörpers zu sensieren. Unter einem "Schlupf" des Wälzkörpers soll insbesondere eine Bewegung des Wälzkörpers relativ zu einem Lagerring des Wälzlagers verstanden werden, welche sich von einem reinen Abrollen des Wälzkörpers auf dem Lagerung unterscheidet, wobei insbesondere ein Gleiten des Wälzkörpers auf dem Lagerring erfolgt. Dadurch kann eine hohe Effizienz erreicht werden. Insbesondere kann erkannt werden, in welchem Winkelbereich eine Belastung des Lagers stattfindet. Im Besonderen kann ein Wartungsbedarf des Lagers erkannt werden, welcher insbesondere durch konstruktive Maßnahmen von Lager und Umgebung bei einem Neubau korrigiert werden kann. Insbesondere erfolgt das Sensieren qualitativ und vorzugsweise quantitativ.

Vorzugsweise ist die Sensoreinheit auf einer Hauptsymmetrieachse des Wälzkörpers angeordnet. Darunter, dass die Sensoreinheit "auf" einer Hauptsymmetrieachse des Wälzkörpers angeordnet ist, soll insbesondere verstanden werden, dass die Hauptsymmetrieachse die Sensoreinheit schneidet, wobei vorzugsweise die Hauptsymmetrieachse eine Testmasse der Sensoreinheit, welche vorzugsweise von der Sensoreinheit zu einer Beschleunigungsmessung verwendet wird, schneidet, und besonders bevorzugt ein Schwerpunkt der Testmasse ein Punkt der Hauptsymmetrieachse ist. Auf diese Weise kann ein einfaches Messen erreicht werden.

Außerdem wird ein Wälzlager mit einer Sensorvorrichtung vorgeschlagen, welche dazu vorgesehen ist, bei wenigstens einem Betriebsvorgang eine Position eines Mittelpunkts wenigstens eines ersten Wälzkörpers des Wälzlagers in einem Inertial-system zu messen. Dadurch kann hohe Effizienz erreicht werden.

Weiterhin wird vorgeschlagen, dass der erste Wälzkörper eine erste Sensoreinheit der Sensorvorrichtung aufweist und ein zweiter Wälzkörper des Wälzlagers eine zweite Sensoreinheit der Sensorvorrichtung aufweist und die erste und die zweite Sensoreinheit in einem Zusammenwirken dazu vorgesehen sind, eine Position des ersten Wälzkörpers in einem Inertialsystem zu messen. Dadurch kann eine präzise Positionsbestimmung erreicht werden.

Ferner wird eine Maschine mit dem Wälzlager vorgeschlagen, wodurch eine hohe Effizienz erreicht werden kann. Die Maschine kann insbesondere eine Windkraftanlage, eine Transportmaschine im Bergbau, eine Maschine zur Lagerung in Schiffen oder eine Maschine mit einem Großgetriebe sein.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt eine Windkraftanlage mit einem Wälzlager,
Fig. 2 zeigt schematisch das einen erfindungsgemäßen Wälzkörper aufweisende Wälzlager,
Fig. 3 zeigt eine schematische Seitenansicht des Wälzkörpers,
Fig. 4 zeigt ein Ausgangssignal eines Beschleunigungssensors des Wälzkörpers, wobei ein Beitrag der Erdbeschleunigung größer ist als ein Beitrag einer Zentrifugalkraft,
Fig. 5 zeigt einen Polarplot, wobei der Winkel des Polarplots die Position des Schwerpunkts des Wälzkörpers im Wälzlager in Bezug auf einen Mittelpunkt des Wälzlagers angibt und auf den Achsen des Polarplots die Eigenrotationsgeschwindigkeit des Wälzkörpers aufgetragen ist,
Fig. 6 zeigt schematisch eine alternative Ausbildung eines erfindungsgemäßen Wälzlagers,
Fig. 7 zeigt zwei verschiedene Betriebspositionen eines einzigen alternativen Ausführungsbeispiels eines erfindungsgemäßen Wälzkörpers, welcher Teil eines Kegelrollenlagers ist, und
Fig. 8 zeigt ein Einwirken der Erdbeschleunigung auf den Wälzkörper.

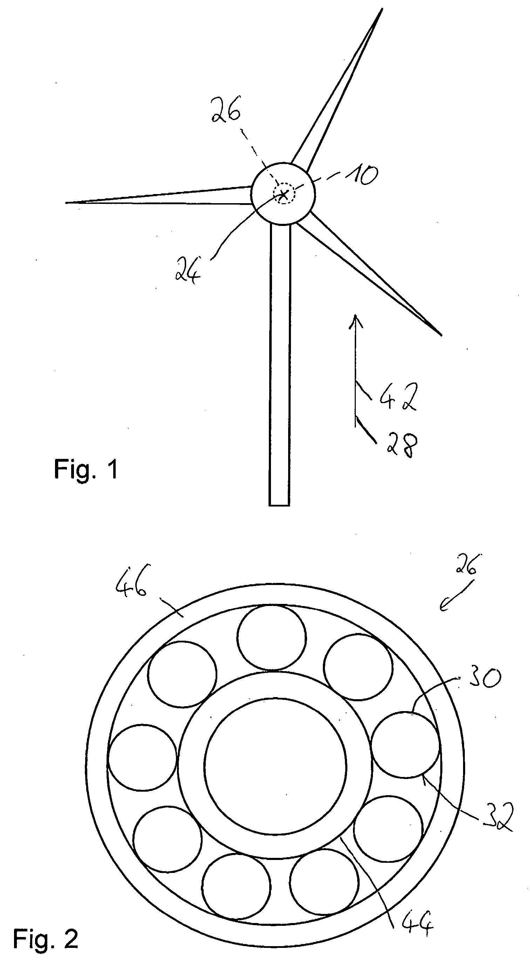

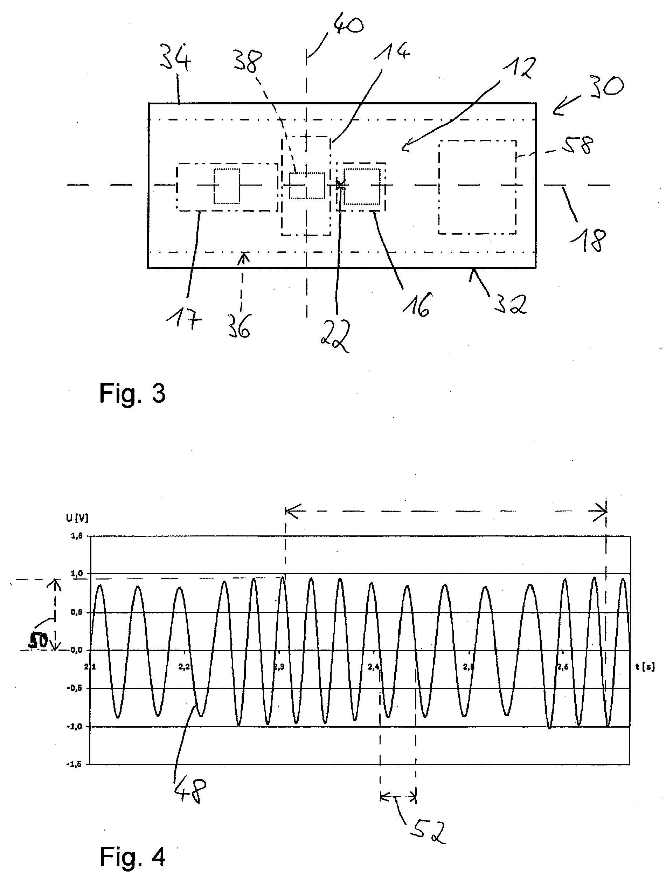

Figur 1 zeigt eine Windkraftanlage mit einem Wälzlager 26, welches einen erfindungsgemäßen Wälzkörper 30 (Figur 2) aufweist. Das Wälzlager 26 ist als Zylinderrollenlager ausgebildet und weist eine axiale Richtung 24 auf, welche senkrecht zu einer vertikalen Richtung 28 ist. Der Wälzkörper 30 weist eine Lauffläche 32 (Figur 3) auf, welche dazu vorgesehen ist, bei einem Betrieb des Wälzlagers 26 auf korrespondierenden Flächen des Wälzlagers 26 abzurollen. Ferner weist der Wälzkörper 30 ein einstückig ausgebildetes Wälzkörperelement 34 mit einer Ausnehmung 36 auf. Das Wälzkörperelement 34 ist hohlzylinderförmig ausgebildet, so dass die Ausnehmung 36 die Form eines Kreiszylinders aufweist. Eine Hauptsymmetrieachse 18 des Wälzkörperelements 34 verläuft parallel zu einer axialen Richtung des hohlzylinderförmig ausgebildeten Wälzkörperelements 34 und durch einen Schwerpunkt des homogen ausgebildeten Wälzkörperelements 34. Eine Sensoreinheit 12 des Wälzkörpers 30, welche in der Ausnehmung 36 angeordnet ist, ist dazu vorgesehen, bei einem Betriebsvorgang, bei welchem sich der Wälzkörper 30 bewegt, einen Schlupf des Wälzkörpers 30 zu sensieren.

Die Sensoreinheit 12 ist an dem Wälzkörperelements 34 befestigt und weist einen ersten, einen zweiten und einen dritten Beschleunigungssensor 14, 16, 17 auf, welche baugleich ausgebildet sind. Die Sensoreinheit 12 ist frei von Gyroskopen. Eine Testmasse 38 des ersten Beschleunigungssensors 14 wird von der Hauptsymmetrieachse 18 geschnitten. Der erste Beschleunigungssensors 14 ist dazu vorgesehen, Beschleunigungen des Wälzkörpers 30 entlang einer Achse 40 zu messen, welche senkrecht zu der Hauptsymmetrieachse 18 ist und welche diese schneidet und welche zu allen Zeitpunkten immer die gleichen Punkte des Wälzkörperelements 34 schneidet. Dieses Messen der Beschleunigung erfolgt dadurch, dass der Beschleunigungssensor 14 Beschleunigungen seiner Testmasse 38 misst. In gleicher Weise ist der zweite Beschleunigungssensors 16 dazu vorgesehen, Beschleunigungen des Wälzkörpers 30 entlang einer Achse zu messen, welche senkrecht zu der Hauptsymmetrieachse 18 ist und welche diese schneidet und welche senkrecht zu der Achse 40 ist und welche zu allen Zeitpunkten immer die gleichen Punkte des Wälzkörperelements 34 schneidet. Der dritte Beschleunigungssensors 17 ist in gleicher Weise dazu vorgesehen, Beschleunigungen des Wälzkörpers 30 entlang der Hauptsymmetrieachse 18 zu messen. Die Hauptsymmetrieachse schneidet die Testmassen 38 der Beschleunigungssensoren 14, 16, 17 jeweils in ihrem Schwerpunkt, wenn sich der Wälzkörper 30 in einem Inertialsystem in Ruhe befindet. Der Beschleunigungssensor 14 ist ein piezoelektrischer Beschleunigungssensor. Ferner kann der Beschleunigungssensor 14 ein kapazitiver oder ein Beschleunigungssensor sein, welcher die Beschleunigung anhand eines Hitzestroms misst, welcher durch ein Heizmittel des Beschleunigungssensors erzeugt wird. Des Weiteren kann der Beschleunigungssensor 14 ein microelectromechanical system, ein sogenanntes MEMS, oder ein nanoelectromechanical system, ein sogenanntes NEMS, sein. Insbesondere mit einem MEMS ist eine hohe Messpräzision möglich.

Während eines Betriebsvorgangs, bei welchem eine Drehung eines Innenrings 44 des Wälzlagers 26 relativ zu einem Außenring 46 des Wälzlagers 26 stattfindet und bei welchem der Wälzkörper 30 sich bewegt, sensieren die Beschleunigungssensoren 14, 16 einen Schlupf des Wälzkörpers 30. Ein Sensieren des Schlupfs ist auch nur mit einem einzigen der Beschleunigungssensoren 14, 16 möglich. Ein Ausgangssignal 48 des ersten Beschleunigungssensors 14, welches in Form einer Spannung vorliegt, ist zeitabhängig (Figur 4) und proportional zu der Beschleunigung der Testmasse 38 des Beschleunigungssensors 14. Eine maximale Amplitude 50 des Ausgangssignals setzt sich zusammen aus der Einwirkung einer Zentrifugalkraft auf den Wälzkörper 30, welche auf den Wälzkörper 30 aufgrund einer Drehung des Wälzkörpers 30 um den Mittelpunkt des Wälzlagers 26 wirkt, und der Erdbeschleunigung. Ist die Drehung schnell, dominiert der Beitrag der Zentrifugalkraft. Ist die Drehung langsam dominiert der Beitrag der Erdbeschleunigung (siehe Figur 4), wobei in dem Fall, in dem der Beitrag der Zentrifugalkraft dominiert, pro Umlauf des Wälzkörpers 30 um den Mittelpunkte des Wälzlagers 26 eine Drehung weniger von der Sensoreinheit 12 registriert wird. Eine minimale Amplitude des Ausgangssignals 48 resultiert direkt aus der Differenz zwischen der Erdbeschleunigung und der Zentrifugalbeschleunigung, welche aus der Zentrifugalkraft resultiert. Ein Zeitraum 52 zwischen zwei Nulldurchgängen des Ausgangssignals 48, zwischen welchen genaue ein weiterer Nulldurchgang des Ausgangssignals 48 stattfindet, ist ein Zeitraum, in welcher sich der Wälzkörper 30 - in einem Inertialsystem betrachtetetwa - bis auf eine Drehung der Richtung der Zentrifugalkraft - ein Mal um seine Hauptsymmetrieachse 18 dreht. Der Effekt der Drehung der Richtung der Zentrifugalkraft kann rechnerisch durch eine Berücksichtigung des Variierens der Amplitude des Ausgangssignals 48 berücksichtigt werden (siehe unten). Variieren die Zeiträume zwischen zwei Nulldurchgängen des Ausgangssignals 48, zwischen welcher genau ein weiterer Nulldurchgang des Ausgangssignals 48 stattfindet, mit der Zeit und bleibt dabei die Drehgeschwindigkeit des Innenrings 44 relativ zu dem Außenring 46, welcher in einem Inertialsystem ruht, konstant oder zumindest in etwa konstant, so findet bei der Bewegung des Wälzkörpers 30 Schlupf statt. Bei einer Einstellung des Wälzlagers 26, bei welcher sichergestellt ist, dass zumindest bei einer Rotation des Wälzkörpers 30 kein Schlupf vorliegt, kann aus einem verlängerten Zeitraum 52 Schlupf gefolgert werden. Eine zusätzliche Verwendung des Beschleunigungssensors 16 bei der Schlupfsensierung erhöht die Präzision.

Ferner ist die Sensoreinheit 12 dazu vorgesehen, eine Position des Schwerpunkts 22 des Wälzkörpers 30 in einem Inertialsystem zu messen. Ein Bezugssystem, in dem der Außenring 46 und der Erdboden ruhen, wird noch als Inertialsystem angesehen. Weist das Ausgangssignal 48 eine maximale Amplitude auf, so ist der Schwerpunkt 22 bei seiner Bewegungsbahn an einer tiefsten Stelle in Bezug auf die Vertikale 42 angeordnet. Daraus kann näherungsweise ebenfalls auf die Position eines Wälzkörperkäfigs (nicht dargestellt) des Wälzlagers 26 geschlossen werden.

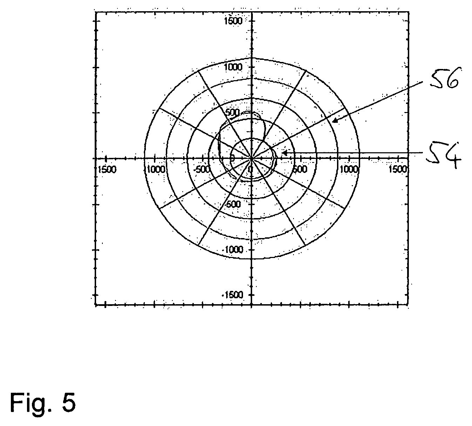

Figur 5 zeigt einen Polarplot, welcher aus Messdaten der Sensoreinheit 12 gewonnen wurde, wobei der Winkel des Polarplots einem Winkel entspricht, der die Position des Schwerpunkts des Wälzkörpers 30 im Wälzlager 26 in Bezug auf einen Mittelpunkt des Wälzlager 26 angibt und auf den Achsen die Eigenrotationsgeschwindigkeit des Wälzkörpers 30 aufgetragen ist, wobei zwei Kurven 54 dargestellt sind, welche jeweils für eine Umrundung des Mittelpunkts des Wälzlagers 26 durch den Wälzkörper 30 stehen und welche die dabei vorherrschende Eigenrotationsgeschwindigkeit des Wälzkörpers 30 wiedergeben. Ferner ist ein Kreis 56 gezeigt, welcher die Soll- Eigenrotationsgeschwindigkeit wiedergibt, welcher der Wälzkörper 30 bei einem reinen Abrollen auf Innen- und Außenring 44, 46 hat. Im in Figur 5 gezeigten Beispiel liegen die Kurven 54 innerhalb des Kreises 56, so dass bei der Bewegung des Wälzkörpers 30 permanent Schlupf auftritt.

Ferner weist der Wälzkörper 30 eine Einheit 58 mit einer Batterie, welche Stromversorgung liefert, einem Mikrokontroller, einer elektronischen Speichereinheit, einer Sende-Empfangseinheit und einer Antenne auf. Die Einheit 58 ist elektrisch mit der Sensoreinheit 12 verbunden. Daten der Sensoreinheit 12 werden von der Einheit 58 per Funkt an eine externe Recheneinheit, welche in der Windkraftanlage angeordnet sein kann, übertragen. Der Mikrokontroller oder die Recheneinheit erfassen den Schlupf mit Hilfe der Daten der Sensoreinheit 12 quantitativ. Tritt pro Zeiteinheit Schlupf auf, welcher ein vorbestimmtes und in der Speichereinheit gespeichertes Maß an Schlupf quantitativ überschreitet, so kann eine Einstelleinheit (nicht gezeigt) der Windkraftanlage die Windkraftanlage deaktivieren, indem die Rotorblätter der Windkraftanlage derart zum Wind gestellt werden, dass kein Antrieb der Windkraftanlage stattfindet. Der Mikrokontroller oder die Recheneinheit berechnen mit Hilfe der Daten der Sensoreinheit 12 ebenfalls die Position des Schwerpunkts 22 des Wälzkörpers 30 in dem genannten Inertialsystem.

Die Schlupfmessung kann entsprechend für andere Lagertypen, wie insbesondere Kegelrollenlager verwendet werden.

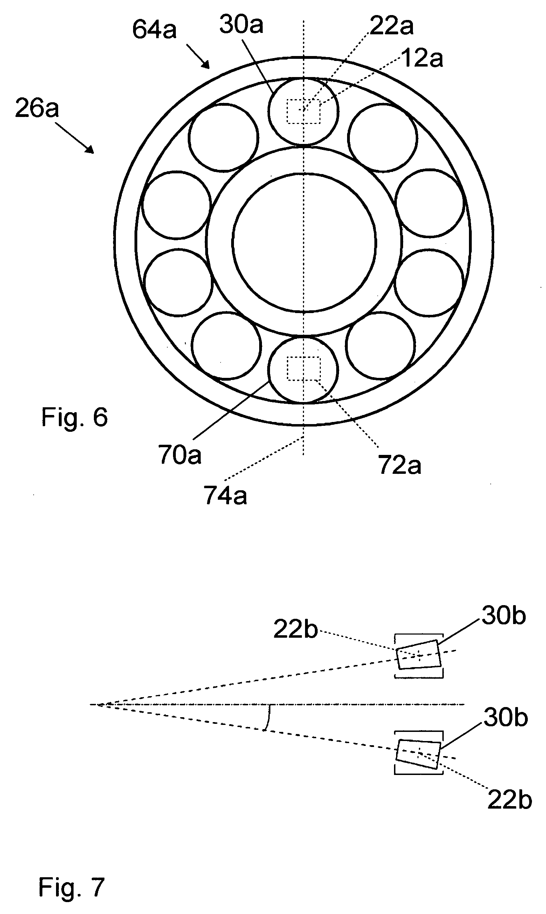

In den Figuren 6 bis 8 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Fig. 6 bis 8 die Buchstaben "a" bzw. "b" hinzugefügt. Die nachfolgende Beschreibung beschränkt sich im Wesentlichen auf die Unterschiede zu dem Ausführungsbeispiel in den Fig. 1 bis Fig. 5, wobei bezüglich gleich bleibender Bauteile, Merkmale und Funktionen auf die Beschreibung des Ausführungsbeispiels in den Fig. 1 bis Fig. 5 verwiesen werden kann.

Figur 6 zeigt ein alternatives Ausführungsbeispiel eines als Zylinderrollenlager ausgebildeten Wälzlagers 26a mit einer Sensorvorrichtung 64a, welche eine erste und eine zweite Sensoreinheit 12a, 72a aufweist. Die erste Sensoreinheit 12a ist Teil eines ersten Wälzkörpers 30a des Wälzlagers 26a, die zweite Sensoreinheit 72a ist Teil eines zweiten Wälzkörpers 70a des Wälzlagers 26a. Die beiden Wälzkörper 30a, 70a sind baugleich mit dem Wälzkörper 30, welcher im vorherigen Ausführungsbeispiel beschreiben wurde. Ein Mittelpunkt 22a des ersten Wälzkörpers 30a, welches der Schwerpunkt des ersten Wälzkörpers 30a ist, liegt auf einer Geraden 74a, welche durch den Schwerpunkt des Wälzlagers 26a und den Schwerpunkt des Wälzkörpers 70a verläuft. Eine axiale Richtung des Wälzlagers 26a verläuft senkrecht zu der Gerade 74a. Die Gerade 74a verläuft während eines Betriebsvorgangs in vertikaler Richtung. Der Schwerpunkt des Wälzkörpers 30a nimmt Beschleunigungen, welche bei einem Betrieb des Wälzlagers von einer Eigenrotation des Wälzkörpers 30a herrühren, nicht wahr. Diese Beschleunigungen sind Beschleunigungen, welche durch eine Drehung des Wälzkörpers 30a um eine in axiale Richtung des Wälzlagers 26a verlaufende Achse, welche durch den Mittelpunkt 22a verläuft, verursacht sind. Die Sensoreinheit 12a misst die Beschleunigungskomponente, welche bei einem Betriebsvorgang auf den Schwerpunkt des Wälzkörpers 30a wirkt und in einer Ebene liegt, welche zur axialen Richtung des Wälzlagers 26a senkrecht ist. Die Sensoreinheit 72a misst die Beschleunigungskomponente, welche bei einem Betriebsvorgang auf den Schwerpunkt des Wälzkörpers 70a wirkt und in einer Ebene liegt, welche zur axialen Richtung des Wälzlagers 26a senkrecht ist. Eine Differenz des Betrags der von der Sensoreinheit 12a gemessenen Beschleunigungskomponente und des Betrags der von der Sensoreinheit 72a gemessenen Beschleunigungskomponente weist einen sinusförmigen zeitlichen Verlauf auf, von welchem die Positionen der Schwerpunkte der Wälzkörper 30a, 70a direkt ableitbar sind, was von einer Recheneinheit einer Windkraftanlage, welche das Wälzlager 26a aufweist, ausgeführt wird. Die Erdbeschleunigung wirkt senkrecht zu der axialen Richtung des Wälzlagers 26a. Die Beschleunigungskomponenten setzen sich zusammen aus Erdbeschleunigung und Zentrifugalbescheunigung. In einem alternativen Ausführungsbeispiel, in welchem die Sensoreinheit 12a nicht mittig in Bezug auf eine Gerade, welche parallel zu der axialen Richtung des Wälzlagers 26a verläuft, angeordnet ist und in welcher die Sensoreinheit 12a insbesondere beabstandet von dieser Gerade angeordnet sein kann, misst die Sensoreinheit 12a eine radiale Beschleunigung, welche von einer Rotation des Wälzkörpers 30a um die Gerade in Bezug auf ein erdfestes Bezugssystem verursacht ist, als Gleichanteil, welcher durch einen Hochpassfilter des Wälzlagers 26a weggefiltert werden kann.

Prinzipiell ist denkbar, dass für das vorstehend beschriebene Messverfahren anstatt des Wälzkörpers 70a ein anderer Wälzkörper des Wälzlagers, der sich von dem Wälzkörper 30a unterscheidet, verwendet wird. Ein solcher Wälzkörper kann beispielsweise in einem Winkel von 90° relativ zu dem Wälzkörper 30a angeordnet sein (vgl. Fig. 6). Ferner ist denkbar, für das vorstehend beschriebene Messverfahren Beschleunigungssignale von mehr als zwei Wälzkörpern zu verwenden.

Eine weitere Möglichkeit der Positionsberechnung des Schwerpunkts des Wälzkörpers 30a ist, durch einen Microcontroller des Wälzkörpers 30a die Einhüllende der Radialbeschleunigung des Wälzkörpers 30a zu analysieren. Diese Einhüllende ist moduliert um den Betrag der doppelten Erdbeschleunigung und hat einen sinusförmigen Verlauf, aus welchem die Position des Wälzkörpers 30a im Wälzlager berechnet werden kann.

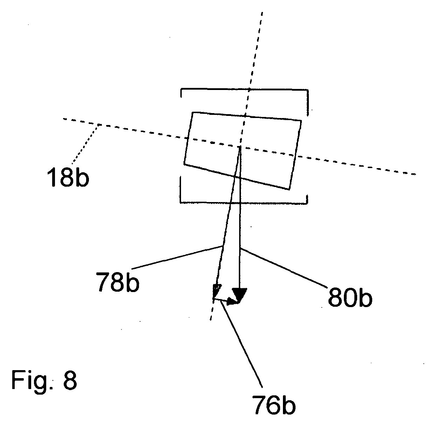

Figur 7 zeigt zwei verschiedene Betriebspositionen eines alternativen Ausführungsbeispiels eines erfindungsgemäßen Wälzkörpers 30b, welcher Teil eines Kegelrollenlagers (nicht gezeigt) ist. Der Wälzkörper 30b unterscheidet sich von dem Wälzkörper 30 nur dadurch, dass er eine Lauffläche aufweist, welche die Form eines Mantels eines kegelstumpfes aufweist. Die Position des Mittelpunkts 22b des Wälzkörpers 30b kann ein Mikrokontroller (nicht gezeigt) des Wälzkörpers 30b mittels einer Sensoreinheit (nicht gezeigt) des Wälzkörpers 30b aus einer Beschleunigung 76b (Figur 8) bestimmen, welche auf eine Testmasse der Sensoreinheit, die auf einer Hauptsymmetrieachse 18b des Wälzkörpers 30b angeordnet ist, entlang der Hauptsymmetrieachse 18b wirkt. In Bezug auf die Zeit verläuft diese Beschleunigung 76b bis auf ein Einwirken einer Zentrifugalbeschleunigung, welche sich durch die Kreisbewegung des Mittelpunkts 22b ergibt, sinusförmig. Das Einwirken der Zentrifugalbeschleunigung macht sich in einem Gleichanteil bemerkbar, welcher mit einem Hochpassfilter (nicht gezeigt) des Wälzkörpers 30b entfernbar ist. Die Beschleunigung 76b addiert sich mit einer Beschleunigung 78b, welche senkrecht zu der Hauptsymmetrieachse 18b verläuft, zu der Erdbeschleunigung 80b, wenn die Zentrifugalbeschleunigung vernachlässigbar ist.

**Bezugszeichenliste**

| | |
|---|---|
| 12 | Sensoreinheit |
| 14 | Beschleunigungssensor |
| 16 | Beschleunigungssensor |
| 17 | Beschleunigungssensor |
| 18 | Hauptsymmetrieachse |
| 22 | Mittelpunkt |
| 24 | Richtung |
| 26 | Wälzlager |
| 28 | Richtung |
| 30 | Wälzkörper |
| 32 | Lauffläche |
| 34 | Wälzkörperelement |
| 36 | Ausnehmung |
| 38 | Testmasse |
| 40 | Achse |
| 42 | Vertikale |
| 44 | Innenring |
| 46 | Außenring |
| 48 | Ausgangssignal |
| 50 | Amplitude |
| 52 | Zeitraum |
| 54 | Kurve |
| 56 | Kreis |
| 58 | Einheit |
| 64 | Sensorvorrichtung |
| 70 | Wälzkörper |
| 72 | Sensoreinheit |
| 74 | Gerade |
| 76 | Beschleunigung |
| 78 | Beschleunigung |
| 80 | Erdbeschleunigung |

## Patentansprüche

1. Wälzkörper für ein Wälzlager mit einer Sensoreinheit (12; 12b), **dadurch gekennzeichnet, dass** die Sensoreinheit (12; 12b) wenigstens einen Beschleunigungssensor aufweist und dazu vorgesehen ist, bei wenigstens einem Betriebsvorgang eine Position eines Mittelpunkts (22; 22b) des Wälzkörpers in einem Inertialsystem zu messen.

2. Wälzkörper nach Anspruch 1, wobei der Beschleunigungssensor (17) dazu vorgesehen ist, Beschleunigungen entlang einer axialen Richtung des Wälzkörpers zu messen.

3. Wälzkörper nach einem der Ansprüche 1 oder 2, wobei der Beschleunigungssensor (16) dazu vorgesehen ist, Beschleunigungen entlang einer bestimmten radialen Richtung des Wälzkörpers (11) zu messen.

4. Wälzkörper nach einem der vorherigen Ansprüche, wobei die Sensoreinheit (12; 12b) dazu vorgesehen ist, bei dem Betriebsvorgang einen Schlupf des Wälzkörpers zu sensieren.

5. Wälzlager mit einem Wälzkörper nach einem der vorhergehenden Ansprüche, mit einer Sensorvorrichtung (64a), **dadurch gekennzeichnet, dass** die Sensorvorrichtung (64a) wenigstens einen Beschleunigungssensor aufweist und dazu vorgesehen ist, bei wenigstens einem Betriebsvorgang eine Position eines Mittelpunkts (22; 22a; 22b) wenigstens eines ersten Wälzkörpers (30; 30a; 30b) des Wälzlagers (26; 26a) in einem Inertialsystem zu messen.

6. Wälzlager nach Anspruch 5, wobei die Sensorvorrichtung (64a) wenigstens ein Bauteil aufweist, welches ebenfalls ein Bauteil des ersten Wälzkörpers (30a) ist, und wobei die Sensorvorrichtung (64a) wenigstens ein Bauteil aufweist, welches außerhalb des ersten Wälzkörpers (30a) angeordnet ist.

7. Wälzlager nach einem der Ansprüche 5 oder 6, wobei die Vorrichtung eine Recheneinheit aufweist, welche dazu vorgesehen ist, mittels wenigstens einer Beschleunigungskenngröße des ersten Wälzkörpers und wenigstens einer Beschleunigungskenngröße eines zweiten Wälzkörpers des Wälzlagers, welche von der Sensorvorrichtung gemessen werden, die Position des Mittelpunkts des ersten Wälzkörpers in einem Inertialsystem zu bestimmen.

8. Wälzlager nach Anspruch 7, wobei das Wälzlager als Kegelrollenlager ausgebildeten ist und die Vorrichtung eine Recheneinheit aufweist, welche dazu vorgesehen ist, anhand einer zeitlichen Veränderung einer von der Sensorvorrichtung gemessenen Beschleunigung, welche entlang einer Hauptsymmetrieachse des ersten Wälzkörpers des Wälzlagers wirkt, eine Position des Mittelpunkts des ersten Wälzkörpers in einem Inertialsystem zu bestimmen.

9. Wälzlager nach einem der Ansprüche 7 bis 8, wobei die Vorrichtung eine Recheneinheit aufweist, welche dazu vorgesehen ist, anhand von einem zeitlichen Verlauf einer Beschleunigung, welche auf eine Testmasse der Sensorvorrichtung, welche ein Teil des ersten Wälzkörpers des Wälzlagers ist, entlang einer relativ zu dem ersten Wälzkörper festen radialen Richtung des ersten Wälzkörpers wirkt, einen zeitlichen Verlauf einer Position des Mittelpunkts des ersten Wälzkörpers in einem Inertialsystem zu bestimmen.

10. Windkraftanlage mit einem Wälzlager nach einem der Ansprüche 5 bis 9.

## Claims

1. Rolling body for a rolling bearing having a sensor unit (12; 12b), **characterized in that** the sensor unit (12; 12b) has at least one acceleration sensor and is provided for measuring, during at least one operating process, a position of a central point (22; 22b) of the rolling body in an inertial system.

2. Rolling body according to Claim 1, wherein the acceleration sensor (17) is provided for measuring accelerations along an axial direction of the rolling body.

3. Rolling body according to either of Claims 1 and 2, wherein the acceleration sensor (16) is provided for measuring accelerations along a particular radial direction of the rolling body (11).

4. Rolling body according to one of the preceding claims, wherein the sensor unit (12; 12b) is provided for sensing slippage of the rolling body during the operating process.

5. Rolling bearing having a rolling body according to one of the preceding claims, having a sensor device (64a), **characterized in that** the sensor device (64a) has at least one acceleration sensor and is provided for measuring, during at least one operating process, a position of a central point (22; 22a; 22b) of at least one first rolling body (30; 30a; 30b) of the rolling bearing (26; 26a) in an inertial system.

6. Rolling bearing according to Claim 5, wherein the sensor device (64a) has at least one component which is likewise a component of the first rolling body (30a), and wherein the sensor device (64a) has at least one component which is arranged outside the first rolling body (30a).

7. Rolling bearing according to either of Claims 5 and 6, wherein the device has a processing unit which is provided such that, by way of at least one acceleration characteristic value of the first rolling body and at least one acceleration characteristic value of a second rolling body of the rolling bearing, which are measured by the sensor device, said processing unit determines the position of the central point of the first rolling body in an inertial system.

8. Rolling bearing according to Claim 7, wherein the rolling bearing is in the form of a tapered-roller bearing and the device has a processing unit which is provided such that, on the basis of a change with respect to time of an acceleration measured by the sensor device, which acceleration acts along a main axis of symmetry of the first rolling body of the rolling bearing, said processing unit determines a position of the central point of the first rolling body in an inertial system.

9. Rolling bearing according to either of Claims 7 and 8, wherein the device has a processing unit which is provided such that, on the basis of a profile with respect to time of an acceleration which acts on a test mass of the sensor device, which test mass is a part of the first rolling body of the rolling bearing, along a radial direction of the first rolling body which is fixed relative to the first rolling body, said processing unit determines a profile with respect to time of a position of the central point of the first rolling body in an inertial system.

10. Wind turbine having a rolling bearing according to one of Claims 5 to 9.

## Revendications

1. Corps de roulement pour un palier à roulement comprenant une unité de capteur (12 ; 12b), **caractérisé en ce que** l'unité de capteur (12 ; 12b) présente au moins un capteur d'accélération et est prévue pour mesurer, lors d'au moins une opération de fonctionnement, une position d'un centre (22 ; 22b) du corps de roulement dans un système référentiel inertiel.

2. Corps de roulement selon la revendication 1, dans lequel le capteur d'accélération (17) est prévu pour mesurer des accélérations le long d'une direction axiale du corps de roulement.

3. Corps de roulement selon l'une quelconque des revendications 1 ou 2, dans lequel le capteur d'accélération (16) est prévu pour mesurer des accélérations le long d'une direction radiale déterminée du corps de roulement (11).

4. Corps de roulement selon l'une quelconque des revendications précédentes, dans lequel l'unité de capteur (12 ; 12b) est prévue pour détecter, lors de l'opération de fonctionnement, un glissement du corps de roulement.

5. Palier à roulement comprenant un corps de roulement selon l'une quelconque des revendications précédentes, comprenant un dispositif de capteur (64a), **caractérisé en ce que** le dispositif de capteur (64a) présente au moins un capteur d'accélération et est prévu, lors d'au moins une opération de fonctionnement, pour mesurer une position d'un centre (22 ; 22a ; 22b) d'au moins un premier corps de roulement (30 ; 30a ; 30b) du palier à roulement (26 ; 26a) dans un système référentiel inertiel.

6. Palier à roulement selon la revendication 5, dans lequel le dispositif de capteur (64a) présente au moins un composant qui est également un composant du premier corps de roulement (30a), et dans lequel le dispositif de capteur (64a) présente au moins un composant qui est disposé à l'extérieur du premier corps de roulement (30a).

7. Palier à roulement selon l'une quelconque des revendications 5 ou 6, dans lequel le dispositif présente une unité de calcul qui est prévue pour déterminer, au moyen d'au moins une grandeur caractéristique d'accélération du premier corps de roulement et d'au moins une grandeur caractéristique d'accélération d'un deuxième corps de roulement du palier à roulement, qui sont mesurées par le dispositif de capteur, la position du centre du premier corps de roulement dans un système référentiel inertiel.

8. Palier à roulement selon la revendication 7, dans lequel le palier à roulement est réalisé sous forme de palier à rouleaux coniques et le dispositif présente une unité de calcul qui est prévue, au moyen d'une modification dans le temps d'une accélération mesurée par le dispositif de capteur, qui agit le long d'un axe de symétrie principal du premier corps de roulement du palier à roulement, pour déterminer une position du centre du premier corps de roulement dans un système référentiel inertiel.

9. Palier à roulement selon l'une quelconque des revendications 7 à 8, dans lequel le dispositif présente une unité de calcul qui est prévue, au moyen d'une allure dans le temps d'une accélération qui agit sur une masse de test du dispositif de capteur qui fait partie du premier corps de roulement du palier à roulement, pour déterminer, le long d'une direction radiale fixe du premier corps de roulement par rapport au premier corps de roulement, une allure dans le temps d'une position du centre du premier corps de roulement dans un système référentiel inertiel.

10. Éolienne comprenant un palier à roulement selon l'une quelconque des revendications 5 à 9.
